# EUROPEAN PATENT APPLICATION

(11) **EP 0 880 212 A2**
(43) Date of publication of application: **25.11.1998**
(21) Application number: 98201643.8
(22) Date of filing: 18.05.1998
(51) Int. Cl.: H02G 15/18

(54) **Splice closure**

(30) Priority: 19.05.1997 GB 9710105
(71) Applicant: N.V. RAYCHEM S.A., B-3200 Kessel-lo (BE)
(72) Inventor: van Meeuwen, Bart, 3294 Diest (BE); Overbergh, Noel Marcel Michiel, 3110 Rotselaar (BE); de Rijck, Jan, 3220 Holsbeek (BE)
(74) Representative: Clayton, Anthony Nicholas

(57) **Abstract**

A method of providing an environmental seal around a splice between cables which have been bared of outer insulation in the splice region, the method comprising:
(i) wrapping a sealing member around the ends of the cut back insulation of each cable on either side of the splice region, each sealing member comprising an elongate strip of a sealing material; and
(ii) wrapping a cover around the sealing member so that the cover exerts an inwardly directed compressive force on the sealing member.

## Description

This invention relates to a method of forming a cable splice closure for example a closure around telecommunications or electrical cables, and to a kit of parts for providing a cable splice closure.

Where a splice is made between cables, it is necessary to cut back the protective outer insulation of the cables in order to bare the wires to form the splice. Once the splice is made, it is necessary to make good the environmental sealing, and the mechanical protection, around the splice region. In order to do this a splice closure is required. As well as permanent, in service, splice closures which are used to protect the splices once completed, it is also sometimes required to have a temporary splice closure. For example, where a splicing operation is lengthy, it may be necessary to take more than one day to complete the splicing. In this event, a temporary splice closure is desirable, to provide environmental protection for a short period of time, e.g. overnight, until the splice can be completed and a permanent closure installed. In general the performance requirements of a temporary closure are less stringent than those for a permanent closure.

There are many different methods of forming a splice closure that are already known. For example, simple taping may be used, heat shrinkable polymer or fabric based sleeves may be used, or mechanical closures involving sealing members at the entry ports to the closures. Examples of these prior art closures are well known to the man skilled in the art.

One known temporary closure involves the use of a rubber sheet coated with a pressure sensitive adhesive and backed with a cloth to provide strength and to protect the adhesive surface. The sheet is wrapped around the splice, and then binding strips are clipped in place around the sheet ends to hold the sheet in place around the cables. Further clips may be used to seal between cables at a branch splice where more than one cable enters the splice region from one side. The known temporary splice closure is effective, but craft sensitive.

WO 97/08797 (Raychem) describes a cable splice closure comprising a gel-based sealing member that can be wrapped around the cable splice. The sealing member comprises a gel strip and a series of gripping elements extending alongside the gel. In a preferred embodiment the gel strip is bordered by elongate foam retaining strips, and the gel and foam strips are mounted on a fibrous support member. In use, the sealing member is spirally wrapped around the cable splice, and the gripping elements cause the sealing member to grip around the cable splice.

The present inventors have discovered a new method of forming a splice closure, which is also preferably gel-based, and which may be used as a temporary splice closure, or in other embodiments as a permanent splice closure.

A first aspect of the present invention provides a method of providing an environmental seal around a splice between cables which have been bared of outer insulation in the splice region, the method comprising:
(i) wrapping a sealing member around the ends of the cut back insulation of each cable on either side of the splice region, each sealing member comprising an elongate strip of a sealing material; and
(ii) wrapping a cover around the sealing member so that the cover exerts an inwardly directed compressive force on the sealing member.

A second aspect of the invention provides a kit of parts for providing an environmental seal around a splice between cables which have been bared of outer insulation in the splice region, comprising:
(i) at least one sealing member comprising an elongate strip of sealing material, for wrapping around the end of the cut back insulation of a cable; and
(ii) a cover for wrapping around the sealing member, comprising a material that is capable of exerting an inwardly directed compressive force on the sealing material.

Preferably the (flexible) cover is wrapped so that it extends over the entire splice region, as well as over the sealing members on either side of the splice region. The cover may take any suitable shape. For example, it may be in the form of a tape. The tape is preferably helically wrapped. However if a sufficiently wide tape is used, the tape may be spirally wrapped. The cover may comprise a single wrapped sheet or a multi wrapped sheet. The tape or sheet used is preferably resiliently stretchable, and the method preferably comprises stretching the tape or cover as it is wrapped. This stretching advantageously provides the inwardly directed compressive force on the sealing member. As examples of a resiliently stretchable sheet that can be used there may be mentioned a polyolefinic, e.g. polyethylene sheet, a rubber tape, or a film of polyvinylchloride, preferably about 25 to 50 microns thick, especially about 35 microns thick.

As another example, the cover may comprise a heat recoverable, preferably a heat shrinkable tape or sheet. Heat recoverable articles are well known. They are articles the dimensional configuration of which may be made to change when subjected to heat. Typically heat recoverable articles are made from a polymeric material that exhibits the property of elastic or plastic memory, as described for example in US 2027962, US 3086242, and US 3597372. More recently heat recoverable articles comprising fabrics have become known, as described for example in EP-A-0117026 and EP-A-0116392. These comprise a recoverable fabric in conjunction with a polymeric matrix formed by laminating a polymeric material to one or both sides of the fabric to render it impervious.

The sealing member used in the present invention comprises a strip of sealing material. The preferred sealing material is a gel. The gel may, for example, comprise silicone gel, urea gel, urethane gel, thermoplastic gel, or any suitable gel or gelloid sealing material. Preferred gels comprise an oil-extended polymer composition. Preferably the gel has a hardness at room temperature as determined using a Stevens-Volland Texture Analyser of greater than 45g, particularly greater than 50g, especially greater than 55g, e.g. between 55g and 60g. It preferably has a stress-relaxation of less than 12%, particularly less than 10% and especially less than 8%. Ultimate elongation, also at room temperature, is preferably greater than 100%, more preferably greater than 600%, especially greater than 1000%, particularly greater than 1400%, as determined according to ASTM D638. Tensile modulus at 100% strain is preferably at least 1.8 MPa more preferably at least 2.2 MPa. In general compression set (as measured according to ASTM D395 at 70°C) is preferably less than 35%, more preferably less than 25%, especially less than 15%. Preferably, the gel has a cone penetration as measured by ASTM D217 of at least 50 (10⁻¹mm), more preferably at least 100 (10⁻¹mm), even more preferably at least 200 (10⁻¹mm) and preferably no greater than 400 (10⁻¹mm), especially no greater than 350 (10⁻¹mm). The polymer composition of the gel may for example comprise an elastomer, or a block copolymer having relatively hard blocks and relatively elastomeric blocks. Examples of such copolymers include styrene-diene block copolymers, for example styrene-butadiene or styrene-isoprene diblock or triblock copolymers e.g. as disclosed in international patent publication number WO 88/00603. Preferably, however, the polymer composition comprises one or more styrene-ethylene-propylene-styrene block copolymers. The extender liquids employed in the gel preferably comprise oils. The oils may be hydrocarbon oils, for example paraffinic or napthenic oils, synthetic oils for example polybutene or polypropene oils, and mixtures thereof. The preferred oils are mixtures of non-aromatic paraffins and naphthenic hydrocarbon oils. The gel may contain additives, e.g. such as moisture scavengers (e.g. Benzoyl chloride), antioxidants, pigments and fungicides.

Gels are preferred because they are often excellent sealing materials, partly due to their ability to wet surfaces with which they come into contact, and partly due to their other physical and chemical properties. However, some or all of the preferred physical properties of gels may be present in sealing materials other than gels. One of the preferred properties of the sealing material is that it has a Stevens Volland hardness of 45g to 130g, more preferably 50g to 70g. Another preferred property of the sealing material is that it has a cone penetration as measured by ASTM D217 of at least 50 (10⁻¹ mm), more preferably at least 100 (10⁻¹ mm), even more preferably at least 200 (10⁻¹ mm), and preferably no greater than 400 (10⁻¹ mm), especially no greater than 350 (10⁻¹ mm).

Other sealing materials which can be used include polymeric (e.g. silicone) foam materials, elastomeric materials, e.g. natural or synthetic rubber, adhesives, especially pressure sensitive adhesives, curable/reactive sealing materials or grease, e.g. silicone grease.

Gels are particularly preferred as the sealing material of the present invention, since the method of the invention involves applying a cover so that it exerts an inwardly directed compressive force of the sealing material, and gels function particularly well when placed under pressure.

Advantageously, the sealing member may further comprise a non-gelatinous resilient material. The resilient material is preferably in the form of at least one elongate strip. For example, the sealing member may comprise a single elongate strip of the resilient material at least partially surrounded by the sealing material. Alternatively, the sealing material strip may be bordered on both longitudinal edges by strips of the resilient material. The use of a non-gelatinous resilient material is particularly advantageous when the sealing material is a gel, since gels may be subject to creep or relaxation over a period of time, and/or may change in volume due to temperature fluctuations. The advantage of using a resilient material is that if, in use, creep, relaxation, or increase or decrease in volume of the sealing material occurs, the resilient material will, in conjunction with the outwardly applied cover, continue to maintain a pressure on the sealing material. Preferably the resilient material is a polymeric foam, such as a silicone, polyolefin, or a polyurethane foam.

According to one preferred embodiment, the sealing member comprises a support member to strengthen the sealing material and to make it easier to handle. Preferably the support member is in the form of a mesh, e.g. a polymeric, particularly a polyethylene mesh. The mesh is preferably embedded in the sealing member. Where the sealing member comprises a gel strip between two foam strips, the mesh preferably extends, in the plane of the sealing member strip, through both the gel and the foam strips.

According to the method of the invention (and preferably according to the kit) two sealing members are used, wrapped around the cut back insulation of the cables on respective sides of the splice region, and these sealing members are used in conjunction with a cover that bridges the sealing members (as well as covering and compressing the sealing members) , and thereby also covers the central splice region. Thus the cover, which seals efficiently to the sealing members on either side of the splice region, ensures that no moisture or other environmentally damaging material enters the splice region from between the sealing members. The sealing members themselves, which seal efficiently to the cut back insulation of the cables on either side of the splice region, ensure that no moisture or other environmentally damaging material enters the splice region from the ends.

In a preferred embodiment, a rigid, preferably generally cylindrical canister, is positioned around the central splice region to provide mechanical protection, before the outer cover is wrapped. The canister is preferably wraparound, or in the form of half shells, for easy installation. The canister may be metal, e.g. aluminium. Preferably the canister is provided at each end with tapered fingers. The tapered fingers are preferably taped down, e.g. with insulating tape, onto the cables, to smooth the transition between the bulkier splice region and the narrower cables.

Where a branch splice is made, two or more cables will exit the splice region on at least one side thereof. In this case a variation to the method of the present invention is desirable. Where only two cables exit the branch splice region on one or both sides, the variation to the method may simply comprise first wrapping the sealing member between the cables and then wrapping it around both cables. Where more than two cables exit the splice region on one or both sides a preferred method comprises positioning one or more dividing strips of sealing material between the said two or more cables and then wrapping the main elongate strip of sealing material around the cables. The dividing strips of sealing material are preferably short strips of identical composition to the main sealing member strip. These dividing strips may conveniently be provided by cutting short lengths of sealing material strip from the main sealing member strip.

As mentioned above, the method of the invention may be used for providing a temporary closure around a splice. When it is desired to remove the temporary closure. e.g. to continue work on the splice region, it is a simple operation to unwrap or cut the outer cover (preferably wrapped tape or film), and to remove the sealing members. Particularly where the sealing members comprise gel and foam, the sealing member can be removed cleanly from the cable, and will leave no residual material on the cables. Thus no additional cleaning step is necessary to prepare the cables for a permanent closure. This is a particular advantage of the present invention. Other advantages are that it is easy to use, no initial cable preparation is required, no tools are required, a minimum number of parts are used, and the closure mechanism is size independent, the appropriate length of sealing member and cover simply being cut on site according to the size of splice.

The method and the kit of parts according to the invention may be used to provide a temporary or permanent closure; where a permanent closure is desired the cover preferably comprises a thicker material than for a temporary closure. For example, for a temporary closure, the cover preferably has a thickness of about 30 to 200 microns, whereas for a permanent closure, the cover preferably has a thickness of about 1 mm. Alternatively, or in addition, where the closure is to be used as a permanent closure, an additional outer cover sheet or tape, or heat shrinkable sheet or tape may be installed. This outer cover sheet or tape may include adhesive, e.g. pressure sensitive adhesive, or gel and/or other sealing material, for sealing against the cables and/or the inner cover (where present).

Embodiments of the present invention will now be described, by way of example only, with reference to the accompanying drawings, wherein:
Figure 1 is a side view showing a branch out splice between telecommunications cables, to be sealed by the invention;
Figure 2 is a side view showing the splice of Figure 1 with sealing members and a central canister installed around the splice according to the invention;
Figure 3 is a longitudinal section through Figure 2 after the further step of applying the outer cover has been carried out;
Figure 4 is a side view showing the arrangement of Figure 3;
Figure 5 is a perspective view showing a short length of the sealing member as used in the invention;
Figure 6 is an end view showing the branch out region of the cables exiting the closure illustrated by Figures 3 and 4;
Figure 7 is a perspective view showing a short length of another construction of the sealing member as used in the invention; and
Figure 8 is a plan view of one construction of cover used in the invention.

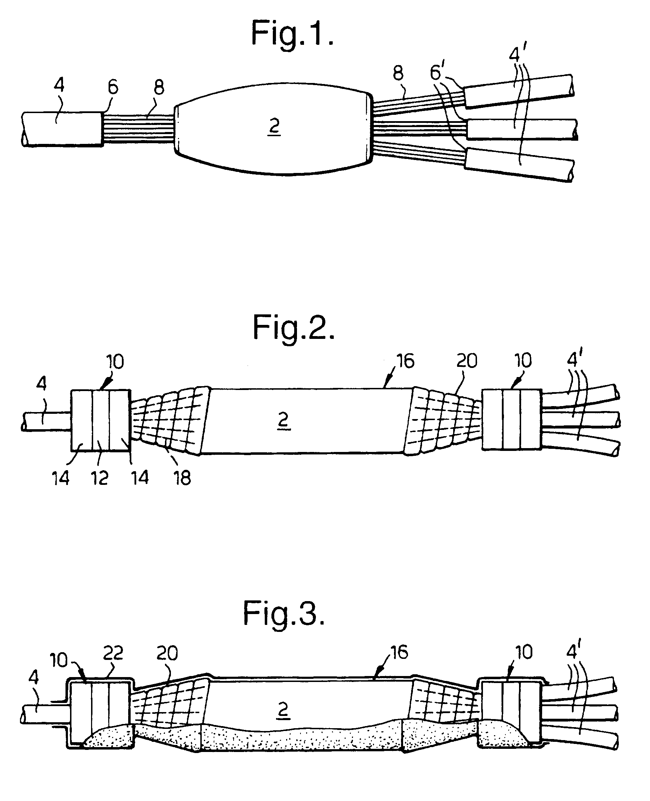

Referring now to the drawings, Figure 1 shows a splice 2 between cables 4. The splice is a branch splice, with one cable 4 entering the splice from one side, and three cables 4' exiting the splice on the other side. The outer insulation of each of the cable 4,4' has been cut back at 6, 6' to bare the wires 8 for splicing. The splicing at 2 is not complete, but it is desirable to make a temporary closure around the splice 2. This is the subject of the method of the present invention which is described with reference to the following Figures.

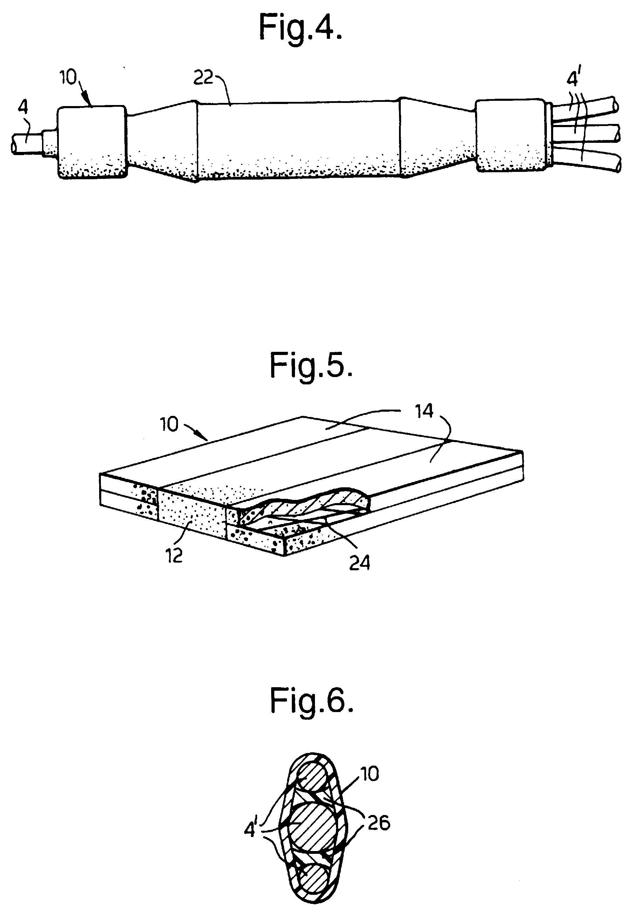

In Figure 2 some of the steps of the method of the invention have been carried out. Two sealing members 10 (shown in more detail in Figure 5) have been wrapped around the cut back insulation 6,6' on either side of the splice region 2. Each sealing member 10 comprises a central gel strip 12, and bordering foam retaining strips 14. A generally cylindrical aluminium wraparound canister 16 has been positioned around the splice 2 to provide mechanical protection. The canister 16 has tapered fingers 18 at each end. The fingers 18 have been taped down onto the cables by insulating tape 20, to smooth the transition between the bulkier splice region 2 and the cables 4,4'.

Figures 3 and 4 show the final step of the method in which an outer cover 22 of thin stretchable polyvinylcholoride film, of thickness about 35 microns, has been installed. The cover 22 is wrapped so that it extends over the entire splice region 2, and over and beyond the edges of both sealing members 10. The cover 22 is stretched as it is installed so that it exerts an inwardly directed compressive force on each of the sealing members 10.

Figure 5 shows in detail the configuration of the sealing member 10. It comprises a central strip of gel bordered on both longitudinal edges by strips of resilient foam 14. A support member comprising a polyethylene mesh 24 is embedded within the gel 12 and foam 14. The sealing member 10 is installed by wrapping it around the cut back cable insulation 6. The sealing member 10 may be wrapped once around the cable, but is preferably spirally wrapped to provide several, e.g. 2 to 5 layers around the cut back cable insulation 6.

Figure 6 shows a solution for sealing the branch out region between the three cables 4' exiting the cable splice region on one side thereof. The three cables 4' are first arranged in line. Two short strips 26 of sealing member are cut from a long length of the sealing member 10, and are positioned between respective pairs of cables 4'. Finally the main length of sealing member 10 is wrapped around the outside of the cables 4'.

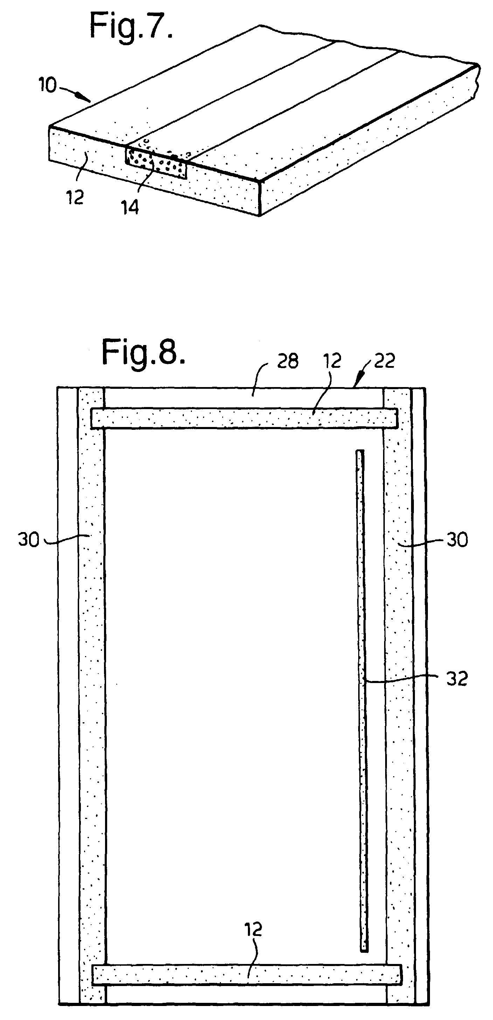

Figure 7 shows a preferred construction of sealing member 10, which comprises a single strip of a resilient foam material 14 partially surrounded by the gel sealing material 12.

Figure 8 shows a possible construction of the cover 22. It comprises a polymeric (e.g. ethylene vinyl acetate) sheet 28 which has strips of gel sealing material 12 secured to two opposite ends. These opposite ends will be located on either side of the cable splice, around the cable insulation. There is also a strip of pressure sensitive adhesive 30 along each longitudinal edge of the sheet, for securing the sheet in place around the splice when wrapped. There is also a longitudinal strip of double-sided adhesive tape 32 which is used to facilitate the initial positioning and wrapping of the sheet around the splice prior to the securement by means of the pressure sensitive adhesive 30.

Although the specific embodiment has been directed to a temporary closure, it is understood that the method and kit of parts could be used to provide a permanent closure. In particular, the method could be modified by using a thicker material for the cover 22, and/or by installing an additional cover around the outside of cover 22.

## Claims

1. A method of providing an environmental seal around a splice between cables which have been bared of outer insulation in the splice region, the method comprising:
(i) wrapping a sealing member around the ends of the cut back insulation of each cable on either side of the splice region, each sealing member comprising an elongate strip of a sealing material; and
(ii) wrapping a cover around the sealing member so that the cover exerts an inwardly directed compressive force on the sealing member.

2. A kit of parts for providing an environmental seal around a splice between cables which have been bared of outer insulation in the splice region, comprising:
(i) at least one sealing member comprising an elongate strip of sealing material, for wrapping around the end of the cut back insulation of a cable; and
(ii) a cover for wrapping around the sealing member, comprising a material that is capable of exerting an inwardly directed compressive force on the sealing material.

3. A method according to claim 1 or a kit according to claim 2, in which the sealing member further comprises a non-gelatinous resilient material.

4. A method or kit according to claim 3, in which the resilient material is in the form of at least one elongate strip.

5. A method or kit according to claim 4, in which the sealing member comprises a single elongate strip of the resilient material at least partially surrounded by the sealing material.

6. A method or kit according to claim 4, in which the sealing member comprises an elongate strip of the resilient material extending along each longitudinal edge of the strip of sealing material.

7. A method or kit according to any preceding claim, wherein the cover is wrapped so that it extends beyond the wrapped sealing members on either side of the splice region, and over the central splice region between the wrapped sealing members.

8. A method or kit according to any preceding claim, wherein the cover comprises a tape, and the tape is helically wrapped.

9. A method or kit according to claim 8, wherein the tape is a resiliently stretchable tape.

10. A method or kit according to any one of claims 1 to 8, wherein the cover is heat recoverable, preferably heat shrinkable.

11. A method or kit according to any preceding claim, wherein the sealing material of the sealing member comprises gel.

12. A method or kit according to claim 3, or any claim dependent thereon, wherein the resilient material comprises a foam material.

13. A method or kit according to any preceding claim, further comprising a mechanical protection means placed around the splice region prior to wrapping the cover.

14. A method or kit according to claim 13, wherein the mechanical protection means comprises a rigid cannister, which is preferably wraparound.

15. A method according to any preceding method claim, for forming an environmental seal around a branch splice, where two cables exit the splice region at at least one side thereof, the method comprising wrapping the sealing member firstly between the two cables exiting the said one side of the splice region, and then around the cut back insulation of the said two cables.

16. A method according to any of method claims 1 to 14, for forming an environmental seal around a branch splice where two or more cables exit the splice region at at least one side thereof, the method comprising firstly positioning one or more dividing strips between the said two or more cables exiting the said one side of the splice region, and then wrapping the sealing member around the cut back insulation of the said two cables.

17. A method according to claim 16, comprising the step of cutting one or more lengths from the sealing member to provide the said dividing strips.
